# EUROPEAN PATENT APPLICATION

(11) **EP 4 592 341 A1**
(43) Date of publication of application: **30.07.2025**
(21) Application number: 22959184.7
(22) Date of filing: 23.09.2022
(51) Int. Cl.: C08J 11/18, C08G 59/50, C08L 79/08

(54) **METHOD FOR DEGRADING ANHYDRIDE EPOXY CURED PRODUCT, POLYOL PREPARED THEREFROM, AND THERMOSETTING RESIN**

(71) Applicant: Swancor Innovation & Incubation Co., Ltd., Nantou City, Nantou County 540028 (TW)
(72) Inventor: WANG, Meng-wei, Nantou City, Taiwan 540028 (TW); TSENG, Chien-wei, Nantou City, Taiwan 540028 (TW); CHANG, Meng-ting, Nantou City, Taiwan 540028 (TW); HSU, Chih-kai, Nantou City, Taiwan 540028 (TW)
(74) Representative: Ter Meer Steinmeister & Partner
(86) International application number: PCT/CN2022/120750
(87) International publication number: WO 2024/060177

(57) **Abstract**

The present invention provides a method for degrading an anhydride epoxy cured product, a polyol prepared therefrom, and a thermosetting resin. The method for degrading the anhydride epoxy cured product comprises carrying out a mixing step and carrying out a degradation step. In the mixing step, the anhydride epoxy cured product and an alcohol amine compound are mixed to form a degradation system, and the alcohol amine compound has a structure represented by formula (I), wherein various symbols in formula (I) are as defined in the description. In the degradation step, a degradation system is heated to a degradation temperature, such that the anhydride epoxy cured product is degraded to form the polyol. Therefore, the alcohol amine compound is heated to decompose the anhydride epoxy cured product, and the product polyol obtained therefrom can be applied to preparation of unsaturated polyester resin, such that the purpose of recycling is achieved.

## Description

### Technical Field

The present disclosure relates to a method for degrading a cured product. More particularly, the present disclosure relates to a method for degrading an acid anhydride epoxy cured product, a polyol prepared thereof and a thermosetting resin.

### Description of Related Art

Thermosetting materials have the characteristic of good resin-processability before being cured, and have advantages of great thermal stability, mechanical strength and chemical resistance after being cross-linked and cured. Hence, the thermosetting materials are widely applied to various fields, and are often used in fiber composite materials with the requirements of high-strength and lightweight. However, due to the characteristics of non-reprocessability and good chemical resistance of the thermosetting materials, it is difficult to recycle the discarded thermosetting materials. Moreover, the service life of the incineration equipment is easily shortened by incinerating the fiber composite materials so as to cause a lot of waste problems. Therefore, it is a key improvement target to deal with the discarded thermosetting materials in the present environmental issues.

Presently, the epoxy resin is one of the popular materials among the thermosetting materials. The epoxy resin has a wide physical property design flexibility, and the epoxy resin can be adapted to different molding conditions and physical property requirements by using different types of curing agents. However, a stable covalent network bonding is formed by mixing the curing agents and epoxy cured products so that it is difficult to reprocess or recycle the epoxy resin for second applications.

Among many types of curing agents, the acid anhydride is a common choice in the carbon fiber pultruded composite materials, and the ester bonds are formed after the cross-linking reaction produced therein. The ester bonds may be structurally decomposed through a transesterification or a hydrolysis reaction, and finally achieve the purpose of degrading the composite materials. However, there are problems of catalyst residue and poor conversion efficiency. Furthermore, the ester bonds in the resins can be hydrolyzed with alkaline catalysts, but the waste water will be produced in the degradation method, and the degradation method will cause secondary pollutions to the environment.

For all these reasons, it is necessary to find a way to degrade epoxy cured products and simultaneously recycle the products formed after degrading the epoxy cured products so as to achieve the circular economy.

### SUMMARY

One of the objectives of the present disclosure is to provide a method for degrading an acid anhydride epoxy cured product and a polyol prepared from the method for degrading the acid anhydride epoxy cured product, in which an alcohol amine compound is heated to degrade the acid anhydride epoxy cured product, and a product of polyol including an amide structure or a carbamide structure is obtained.

Another one of the objectives of the present disclosure is to provide a thermosetting resin, the product of polyol produced in the method for degrading an acid anhydride epoxy cured product is used in a preparation of the thermosetting resin, and the purpose of recycling can be achieved.

According to one aspect of the present disclosure, a method for degrading an acid anhydride epoxy cured product includes performing a mixing step and performing a degradation step. **In** the mixing step, the acid anhydride epoxy cured product is mixed with an alcohol amine compound so as to form a degradation system, and the alcohol amine compound has a structure represented by formula (I): 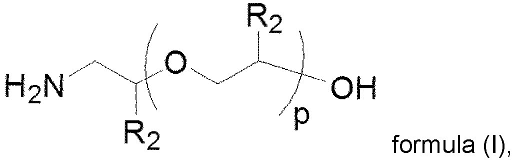 wherein R₂ is each independently a methyl group or a hydrogen atom, p is an integer from 0 to 6. **In** the degradation step, the degradation system is heated to a degradation temperature so that the acid anhydride epoxy cured product is degraded into a polyol.

According to the method for degrading the acid anhydride epoxy cured product of the aforementioned aspect, the method for degrading the acid anhydride epoxy cured product can further include performing a synthesis step of the acid anhydride epoxy cured product, wherein an epoxy compound having a structure represented by formula (II) or/and an epoxy compound having a structure represented by formula (III) reacts with an acid anhydride compound having a structure represented by formula (IV) so as to synthesize the acid anhydride epoxy cured product: 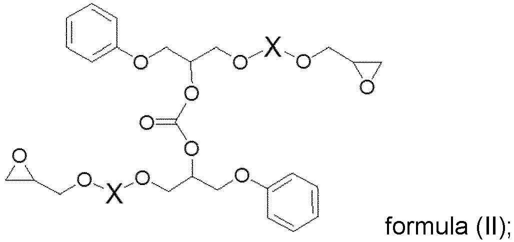 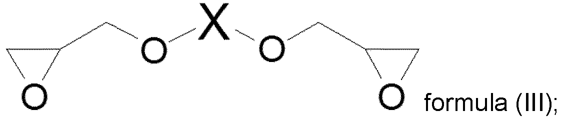 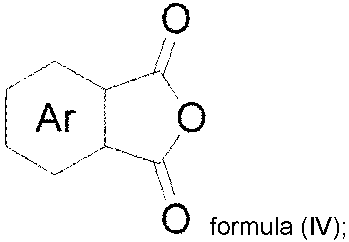 wherein X is each independently an alkylene group of 1 to 12 carbon atoms, or a structure represented by formula (A) or formula (B): 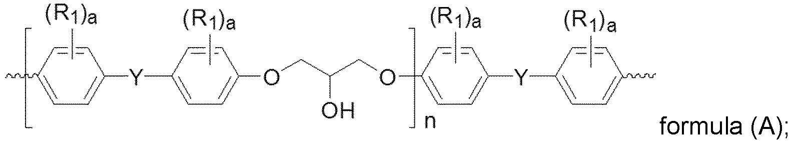 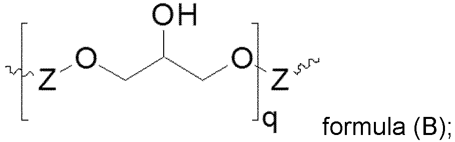 wherein R₁ is each independently an alkyl group of 1 to 4 carbon atoms, a methoxy group, a nitro group or a halogen atom, a is an integer from 0 to 4, n and q are integers from 0 to 10. Y is each independently a single bond, or a structure represented by formula (i), formula (ii), formula (iii), formula (iv), formula (v), formula (vi), formula (vii), formula (viii), formula (ix) or formula (x): 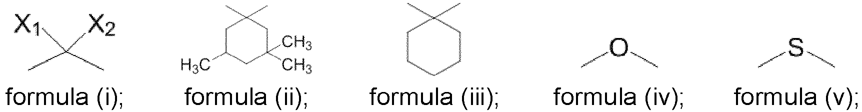 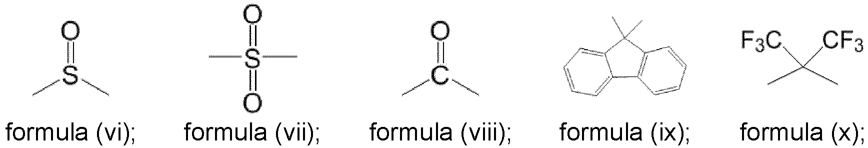 wherein X₁ and X₂ are each independently a hydrogen atom, an alkyl group of 1 to 6 carbon atoms or an aryl group of 6 to 12 carbon atoms. Z is each independently an alkylene group of 1 to 12 carbon atoms, an ortho-phenylene group, a meta-phenylene group, a para-phenylene group, or a structure represented by formula (xi) or formula (xii): 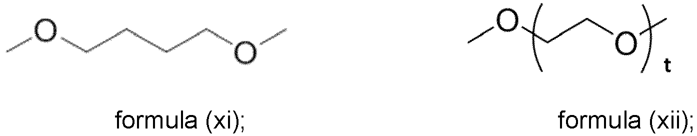 wherein t is an integer from 1 to 6. Ar is a single bond, a double bond, or a structure represented by formula (a), formula (b), formula (c) or formula (d):

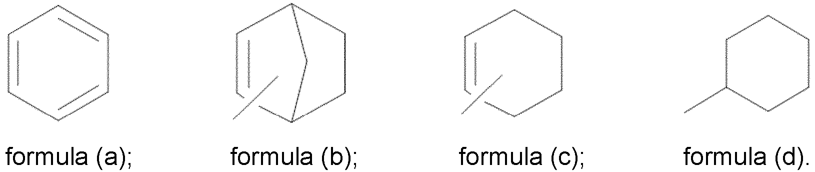

According to the method for degrading the acid anhydride epoxy cured product of the aforementioned aspect, wherein the degradation temperature can be 80°C to 180°C.

According to the method for degrading the acid anhydride epoxy cured product of the aforementioned aspect, wherein the degradation temperature can be 100°C to 150°C.

According to the method for degrading the acid anhydride epoxy cured product of the aforementioned aspect, wherein the degradation system is heated to the degradation temperature for a degradation time in the degradation step, and the degradation time can be 5 minutes to 600 minutes.

According to the method for degrading the acid anhydride epoxy cured product of the aforementioned aspect, wherein the degradation time can be 360 minutes to 480 minutes.

According to the method for degrading the acid anhydride epoxy cured product of the aforementioned aspect, wherein the polyol can include at least one of structures represented by formula (V), formula (VI), formula (VII) and formula (VIII):

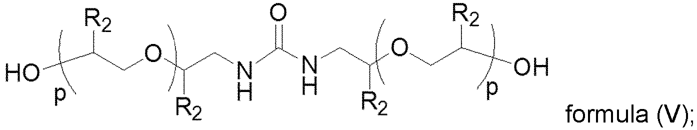

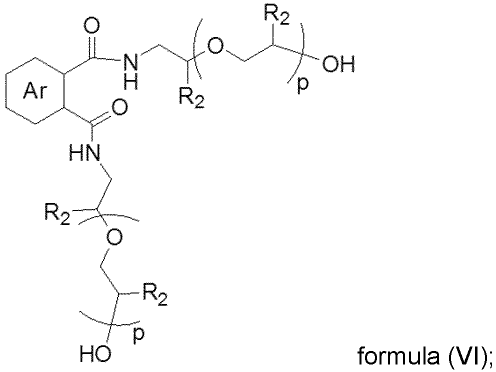

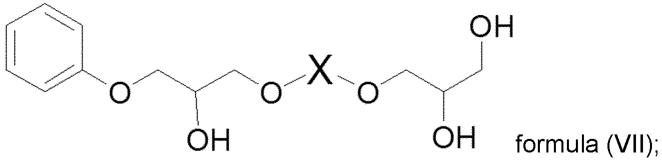

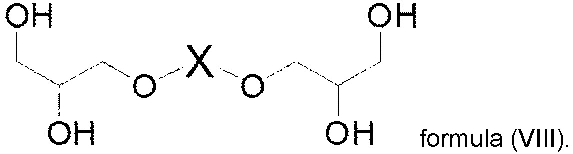

According to the method for degrading the acid anhydride epoxy cured product of the aforementioned aspect, wherein a weight ratio of the alcohol amine compound to the acid anhydride epoxy cured product can be 5:1 to 20:1.

According to the method for degrading the acid anhydride epoxy cured product of the aforementioned aspect, wherein the weight ratio of the alcohol amine compound to the acid anhydride epoxy cured product can be 10:1.

According to another aspect of the present disclosure, a polyol is obtained by performing the method for degrading the acid anhydride epoxy cured product of the aforementioned aspect.

According to still another aspect of the present disclosure, a thermosetting resin is obtained by adding the polyol of the aforementioned aspect to a resin reactant.

According to the thermosetting resin of the aforementioned aspect, wherein the thermosetting resin can be an unsaturated polyester resin.

According to the thermosetting resin of the aforementioned aspect, wherein the resin reactant can include propylene glycol, diethylene glycol, benzoquinone, phthalic anhydride, maleic anhydride and styrene.

According to the thermosetting resin of the aforementioned aspect, wherein an added amount of the polyol can be 1 weight percent to 30 weight percent of a total amount of the resin reactant and the polyol.

According to the thermosetting resin of the aforementioned aspect, wherein the added amount of the polyol can be 5 weight percent to 15 weight percent of the total amount of the resin reactant and the polyol.

Therefore, the alcohol amine compound is heated to dissolve the acid anhydride epoxy cured product in the method for degrading the acid anhydride epoxy cured product of the present disclosure, and the polyol including an amide structure or a carbamide structure is obtained and used in the preparation of the thermosetting resin, and the purpose of recycling can be achieved.

### BRIEF DESCRIPTION OF THE DRAWINGS

The present disclosure can be more fully understood by reading the following detailed description of the embodiment, with reference made to the accompanying drawings as follows.

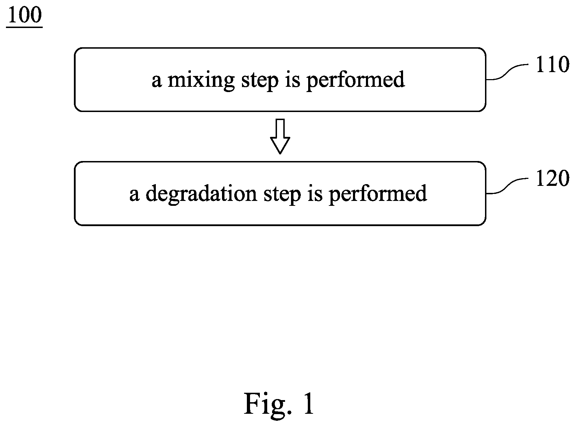

Fig. 1 is a flow chart of a method for degrading an acid anhydride epoxy cured product according to one embodiment of the present disclosure.

### [DENOTATION OF MAIN REFERENCE NUMERALS]

100: method for degrading acid anhydride epoxy cured product
110,120: step

### DETAILED DESCRIPTION

The present disclosure will be further exemplified by the following specific embodiments. However, the embodiments can be applied to various inventive concepts and can be embodied in various specific ways. The specific embodiments are only for the purposes of description, and are not limited to these practical details thereof. **In** addition, some conventional structures and elements are illustrated in the drawings in a simple and schematic way, and repeated elements can be presented by the same or similar reference numerals.

In the present disclosure, the compound structure can be represented by a skeleton formula, and the representation can omit the carbon atom, the hydrogen atom and the carbon-hydrogen bond. In the case that the functional group is depicted clearly in the structural formula, the depicted one is preferred.

In the present disclosure, in order to concise and smooth, "an alcohol amine compound has a structure represented by formula (I)" can be represented as an alcohol amine compound represented by formula (I) or an alcohol amine compound (I) in some cases, and the other compounds or groups can be represented in the same manner.

### <Method for degrading acid anhydride epoxy cured product>

Reference is made to Fig. 1, and Fig. 1 is a flow chart of a method for degrading an acid anhydride epoxy cured product 100 according to one embodiment of the present disclosure. **In** Fig. 1, the method for degrading the acid anhydride epoxy cured product 100 includes step 110 and step 120.

In step 110, a mixing step is performed, wherein the acid anhydride epoxy cured product is mixed with an alcohol amine compound so as to form a degradation system, and the alcohol amine compound has a structure represented by formula (I): 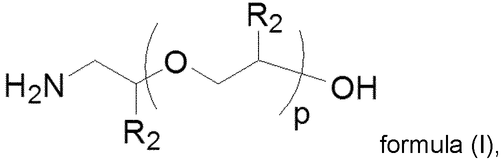 wherein R₂ is each independently a methyl group or a hydrogen atom, and p is an integer from 0 to 6.

In step 120, a degradation step is performed, wherein the degradation system is heated to a degradation temperature so that the acid anhydride epoxy cured product is degraded into a polyol, and the degradation temperature can be 80°C to 180°C. Preferably, the degradation temperature can be 100°C to 150°C. **In** detail, the degradation system is heated to the degradation temperature for a degradation time. The degradation time can be 5 minutes to 600 minutes. Preferably, the degradation time can be 360 minutes to 480 minutes.

Furthermore, the method for degrading the acid anhydride epoxy cured product 100 of the present disclosure can further include performing a synthesis step of the acid anhydride epoxy cured product before the mixing step. In the synthesis step of the acid anhydride epoxy cured product, an epoxy compound having a structure represented by formula (II) or/and an epoxy compound having a structure represented by formula (III) reacts with an acid anhydride compound having a structure represented by formula (IV) so as to synthesize the acid anhydride epoxy cured product: 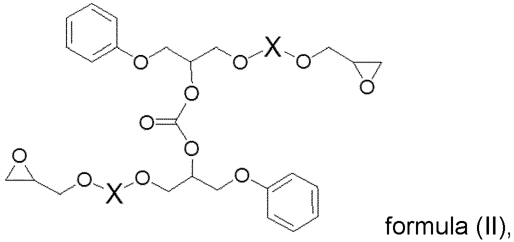 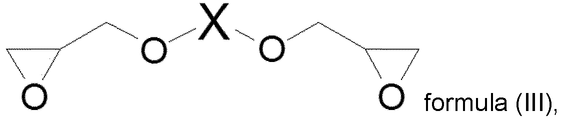 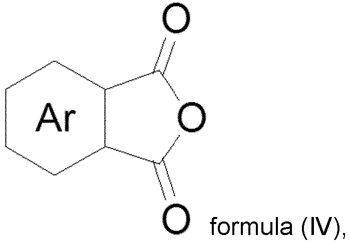 wherein X is each independently an alkylene group of 1 to 12 carbon atoms, or a structure represented by formula (A) or formula (B): 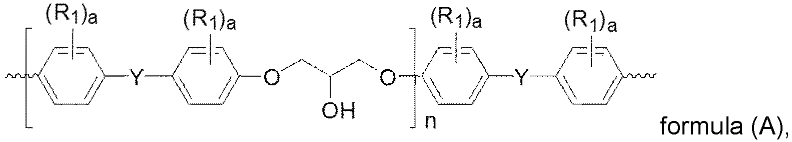 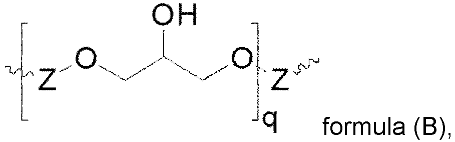 wherein R₁ is each independently an alkyl group of 1 to 4 carbon atoms, a methoxy group, a nitro group or a halogen atom, a is an integer from 0 to 4, n and q are integers from 0 to 10. Y is each independently a single bond, or a structure represented by formula (i), formula (ii), formula (iii), formula (iv), formula (v), formula (vi), formula (vii), formula (viii), formula (ix) or formula (x): 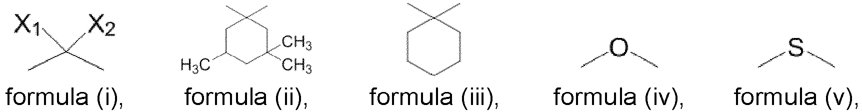 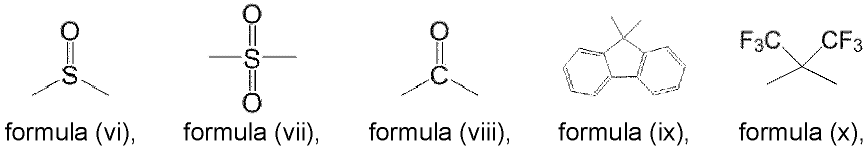 wherein X₁ and X₂ are each independently a hydrogen atom, an alkyl group of 1 to 6 carbon atoms or an aryl group of 6 to 12 carbon atoms. Z is each independently an alkylene group of 1 to 12 carbon atoms, an ortho-phenylene group, a meta-phenylene group, a para-phenylene group, or a structure represented by formula (xi) or formula (xii): 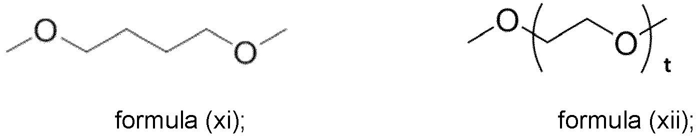 wherein t is an integer from 1 to 6. Ar is a single bond, a double bond, or a structure represented by formula (a), formula (b), formula (c) or formula (d):

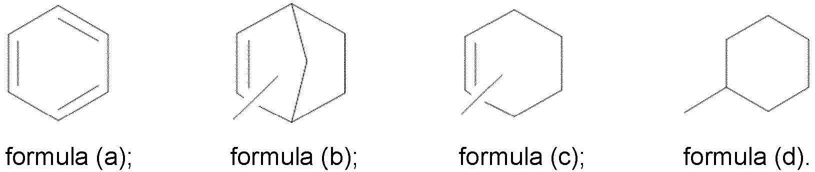

In detail, in the present disclosure, the epoxy compound having the structure represented by formula (II), the epoxy compound having the structure represented by formula (III), or a mixture of the epoxy compound having the structure represented by formula (II) and the epoxy compound having the structure represented by formula (III) is cured with the acid anhydride compound having the structure represented by formula (IV) to form the acid anhydride epoxy cured product, and then the acid anhydride epoxy cured product is heated with the alcohol amine compound having the structure represented by formula (I) so as to perform a degradation reaction so that the acid anhydride epoxy cured product is degraded into the polyol. The polyol can include at least one of structures represented by formula (V), formula (VI), formula (VII) and formula (VIII):

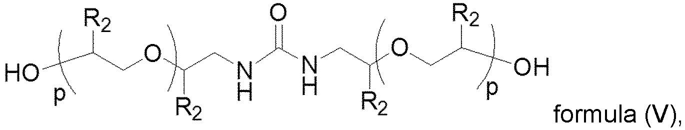

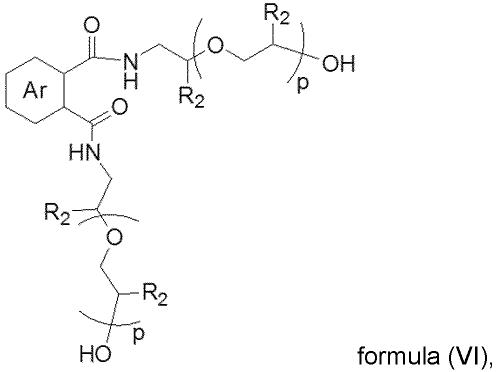

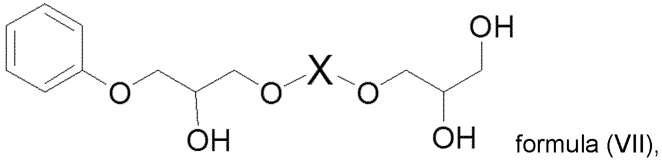

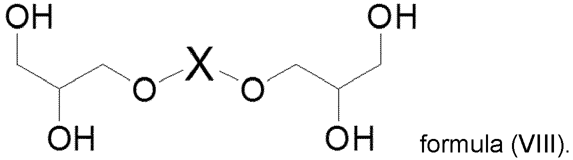

The definitions of X, Ar, R₂ and p are made reference to the above description, and will not be repeated here. Moreover, a weight ratio of the alcohol amine compound to the acid anhydride epoxy cured product can be 5:1 to 20:1. Preferably, the weight ratio of the alcohol amine compound to the acid anhydride epoxy cured product can be 10:1.

Specifically, the polyols having the structures represented by formula (V), formula (VI) and formula (VII) can be formed by degrading the acid anhydride epoxy cured product synthesized from the epoxy compound having the structure represented by formula (II). The polyols having the structures represented by formula (VI) and formula (VIII) can be formed by degrading the acid anhydride epoxy cured product synthesized from the epoxy compound having the structure represented by formula (III). The polyols having the structures represented by formula (V), formula (VI), formula (VII) and formula (VIII) can be formed by degrading the acid anhydride epoxy cured product synthesized from the mixture of the epoxy compound having the structure represented by formula (II) and the epoxy compound having the structure represented by formula (III).

For example, when the epoxy compounds respectively have the structures represented by formula (II) and formula (III), X is the structure represented by formula (A), n and a are each independently 0, Y is the structure represented by formula (i), X₁ and X₂ are each independently a methyl group, and the epoxy compounds respectively have structures represented by formula (II-a) and formula (III-a):

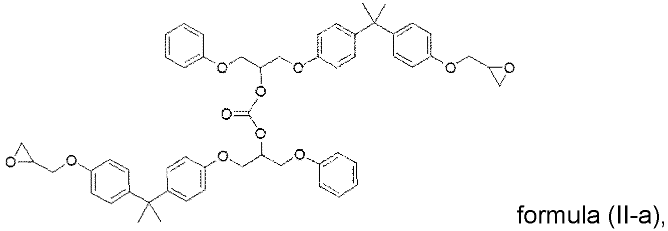

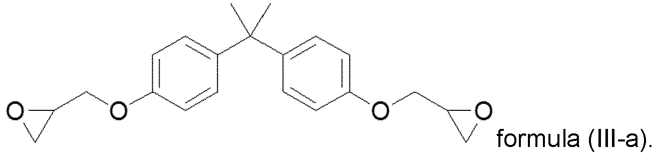

Further, when the acid anhydride compound has the structure represented by formula (IV), Ar is the structure represented by formula (d), the acid anhydride compound is methylhexahydrophthalic anhydride (MHHPA). When the alcohol amine compound has the structure represented by formula (I), R₂ is a hydrogen atom, p is 0, and the alcohol amine compound is ethanolamine. Therefore, the acid anhydride epoxy cured product synthesized by curing the epoxy compounds respectively having the structures represented by formula (II-a) and formula (III-a) with methylhexahydrophthalic anhydride can be degraded via ethanolamine, and the polyols can be obtained. The polyols can respectively include structures represented by formula (V-a), formula (VI-a), formula (VII-a) and formula (VIII-a):

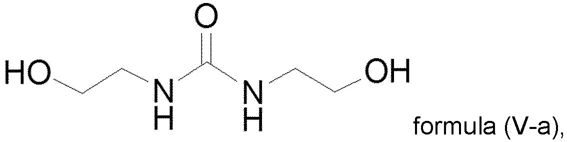

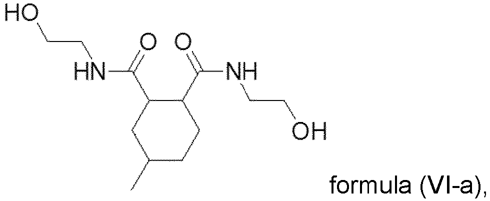

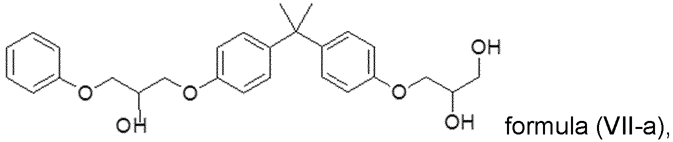

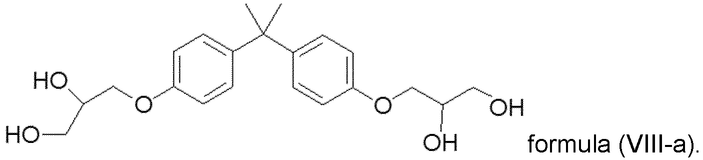

Moreover, when the epoxy compound has the structure represented by formula (III), X is the structure represented by formula (B), q is 0, Z is an alkylene group of 4 carbon atoms, and the epoxy compound has a structure represented by formula (III-b):

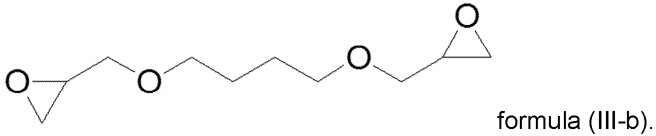

Therefore, the acid anhydride epoxy cured product synthesized by curing the epoxy compound having the structure represented by formula (III-b) with methylhexahydrophthalic anhydride is degraded via ethanolamine, and polyols can be obtained. The polyols can respectively include structures represented by formula (VI-a) and formula (VIII-b):

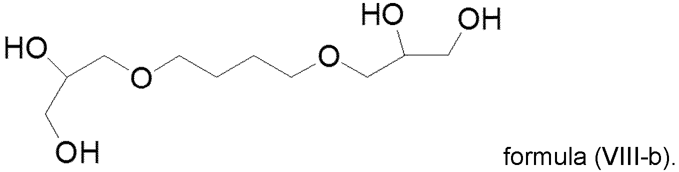

The present disclosure further provides a polyol with an amide structure or a carbamide structure, the polyol includes at least one of the structures represented by formula (V), formula (VI), formula (VII) and formula (VIII), and the polyol is obtained through heating and degrading a mixture of the acid anhydride epoxy cured product and the alcohol amine compound by the method for degrading the acid anhydride epoxy cured product 100.

### <Thermosetting resin>

The present disclosure still further provides a thermosetting resin that is obtained by adding the polyol produced by the method for degrading the acid anhydride epoxy cured product 100 to a resin reactant. Specifically, an added amount of the polyol can be 1 weight percent to 30 weight percent of a total amount of the resin reactant and the polyol. Preferably, the added amount of the polyol can be 5 weight percent to 15 weight percent of the total amount of the resin reactant and the polyol, which would not affect the physical properties of the thermosetting resin. The detail of the polyol can be made reference to the previous description, and will not be repeated here. Furthermore, the thermosetting resin of the present disclosure can be an unsaturated polyester resin, so that the resin reactant can be propylene glycol, diethylene glycol, benzoquinone, phthalic anhydride, maleic anhydride and styrene, but the thermosetting resin and the resin reactant are not limited to the present disclosure, and different resin reactants can be cured with the polyol obtained by the method for degrading the acid anhydride epoxy cured product 100 so as to form the required thermosetting resins. Therefore, the polyol obtained by the method for degrading the acid anhydride epoxy cured product 100 can be applied to the thermosetting resin so as to achieve the purpose of recycling.

The following specific embodiments further illustrate the present disclosure for those with ordinary skill in the technical field to utilize and realize the present disclosure without excessive interpretation. These embodiments should not limit the scope of the present disclosure, but illustrate how to implement the materials and methods of the present disclosure.

### <Example/Comparative example>

### <Degradation of acid anhydride epoxy cured product>

Example 1: an acid anhydride epoxy cured product synthesized by curing a mixture of the epoxy compound having the structure represented by formula (II-a) and the epoxy compound having the structure represented by formula (III-a) with methylhexahydrophthalic anhydride is heated with ethanolamine to 150°C. A amount of ethanolamine is 10 times weight ratio of the acid anhydride epoxy cured product, and the reaction time is 6 hours. Further, after the acid anhydride epoxy cured product is completely dissolved, ethanolamine is extracted via a vacuum concentration, and the polyols (hydrogen equivalent weight; HEW = 147.98 g/eq) respectively having the structures represented by formula (V-a), formula (VI-a), formula (VII-a) and formula (VIII-a) can be obtained.

Example 2: an acid anhydride epoxy cured product synthesized by curing the epoxy compound having the structure represented by formula (III-b) with methylhexahydrophthalic anhydride is heated with ethanolamine to 150°C. The amount of ethanolamine is 10 times weight ratio of the acid anhydride epoxy cured product, and the reaction time is 6 hours. Further, after the acid anhydride epoxy cured product is completely dissolved, ethanolamine is extracted via the vacuum concentration, and the polyols (hydrogen equivalent weight; HEW = 103.12 g/eq) respectively having the structures represented by formula (VI-a) and formula (VIII-b) can be obtained.

Comparative example 1: an acid anhydride epoxy cured product synthesized by curing a commercially available o-cresol novolac epoxy resin (manufactured by Chang Chun Plastics Co., Ltd., CNE220 epoxy resin) with methylhexahydrophthalic anhydride is heated with ethanolamine to 150°C. The amount of ethanolamine is 10 times weight ratio of the acid anhydride epoxy cured product, and the reaction time is 6 hours. The acid anhydride epoxy cured product cannot be completely dissolved.

Comparative example 2: ethanolamine and titanium(IV) butoxide (Ti(OBu)₄) as transesterification catalysts are added to an acid anhydride epoxy cured product synthesized by curing the mixture of the epoxy compound having the structure represented by formula (II-a) and the epoxy compound having the structure represented by formula (III-a) with methylhexahydrophthalic anhydride, and are heated to 150°C. The amount of ethanolamine is 10 times weight ratio of the acid anhydride epoxy cured product, and the reaction time is 6 hours. The acid anhydride epoxy cured product cannot be completely dissolved.

Comparative example 3: ethanolamine and 3-picoline are added to an acid anhydride epoxy cured product synthesized by curing the mixture of the epoxy compound having the structure represented by formula (II-a) and the epoxy compound having the structure represented by formula (III-a) with methylhexahydrophthalic anhydride, and are heated to 150°C. The amount of ethanolamine is 10 times weight ratio of the acid anhydride epoxy cured product, and the reaction time is 6 hours. The acid anhydride epoxy cured product cannot be completely dissolved.

Values of residual weight (%) of Examples 1 to 2 and Comparative examples 1 to 3 are listed in Table 1.

| Table 1 | | | | | |
|---|---|---|---|---|---|
| | Example 1 | Example 2 | Comparative example 1 | Comparative example 2 | Comparative example 3 |
| Residual weight | 0 | 0 | 20 | 98 | 99 |

In Table 1, the acid anhydride epoxy cured products are synthesized by curing linear epoxy compounds with different structures in Example 1 and Example 2, then the acid anhydride epoxy cured products are heated to be degraded with the alcohol amine compound, and are completely degraded at 150°C to show an excellent degradation effect. However, in Comparative example 1, the linear epoxy compound is replaced by a non-linear epoxy resin CNE with multiple functional groups, then heated with the alcohol amine compound, and a completely degraded product cannot be obtained, which results in difficulties of subsequent applications. Moreover, if the acid anhydride epoxy cured product is needed to be degraded into alcohol mixtures, it can be performed by heating the alcohol amine compound mentioned in the present disclosure, and also can be theoretically performed via a transesterification with glycol. In Table 1, ethanolamine is used with the alkaline catalyst or the transesterification catalyst in Comparative example 2 and Comparative example 3, which are heated at 150°C for 6 hours, and there is no obvious degradation effect of the acid anhydride epoxy cured products in Comparative example 2 and Comparative example 3, which can highlight the advantages of using the alcohol amine compound to degrade the acid anhydride epoxy cured product of the present disclosure.

### <Manufacture of unsaturated polyester resin>

Example 3: 160.82 g polyol obtained from Example 1 is mixed with 59.05 g propylene glycol, 29.11 g diethylene glycol, 0.052 g benzoquinone, 110 g phthalic anhydride and 82.83 g maleic anhydride, heated to 100°C for 10 minutes with stirring, and heated to 210°C to perform a distillation (reduced pressure distillation) so as to remove excess alcohol amine compounds. An acid value is less than 35 mg KOH/g after an 8-hour mixing reaction of the polyol, propylene glycol, diethylene glycol, benzoquinone, phthalic anhydride and maleic anhydride, and 214.99 g styrene is added so as to dilute, so that an unsaturated polyester resin of Example 3 is obtained.

Example 4: 67.64 g polyol obtained from Example 1 is mixed with 63.05 g propylene glycol, 31.52 g diethylene glycol, 0.052 g benzoquinone, 110 g phthalic anhydride and 82.83 g maleic anhydride, heated to 100°C for 10 minutes with stirring, and heated to 210°C to perform a distillation (reduced pressure distillation) so as to remove excess alcohol amine compounds. An acid value is less than 35 mg KOH/g after an 8-hour mixing reaction of the polyol, propylene glycol, diethylene glycol, benzoquinone, phthalic anhydride and maleic anhydride, and 214.99 g styrene is added so as to dilute, so that an unsaturated polyester resin of Example 4 is obtained.

Comparative example 4: 201.06 g polyol obtained from Example 1 is mixed with 12.94 g propylene glycol, 6.47 g diethylene glycol, 0.052 g benzoquinone, 110 g phthalic anhydride and 82.83 g maleic anhydride, heated to 100°C for 10 minutes with stirring, and heated to 210°C to perform a distillation (reduced pressure distillation) so as to remove excess alcohol amine compounds. An acid value is less than 35 mg KOH/g after an 8-hour mixing reaction of the polyol, propylene glycol, diethylene glycol, benzoquinone, phthalic anhydride and maleic anhydride, and 214.99 g styrene is added so as to dilute, so that an unsaturated polyester resin of Comparative example 4 is obtained.

Comparative example 5: 88.94 g propylene glycol is mixed with 44.47 g diethylene glycol, 0.052 g benzoquinone, 110 g phthalic anhydride and 82.83 g maleic anhydride, heated to 100°C for 10 minutes with stirring, and heated to 210°C to perform a distillation. An acid value is less than 35 mg KOH/g after an 8-hour reaction, and 214.99 g styrene is added so as to dilute, so that an unsaturated polyester resin of Comparative example 5 is obtained.

Moreover, the unsaturated polyester resins of Example 3, Example 4, Comparative example 4 and Comparative example 5 are respectively added to 1 phr methyl ethyl ketone peroxide (MEKPO) and 1 phr cobalt octoate, evenly stirred and poured into a mold, then cured at room temperature for 12 hours, and cured at 80°C for 4 hours so as to perform subsequent physical properties evaluations.

### <Thermal property evaluation>

The thermal property evaluation of Example 3, Example 4, Comparative example 4 and Comparative example 5 are performed via a differential scanning calorimeter (DSC) with a heating rate of 10°C/min so as to measure the glass transition temperature (T_{g}), and the measurement results of T_{g} (°C) are listed in Table 2.

| Table 2 | | | | |
|---|---|---|---|---|
| | Example 3 | Example 4 | Comparative example 4 | Comparative example 5 |
| T_{g} (°C) | 65 | 67 | 54 | 70 |

In Table 2, the amounts of the polyols in Example 3 and Example 4 are less than 30 weight percent, the physical properties of Example 3 and Example 4 are similar to Comparative example 5 without polyol, and the physical properties (the glass transition temperature is greater than 60°C) can meet the requirement of the industrial applications. The amount of the polyol in Comparative example 4 is greater than 30 weight percent, and the physical property would be significantly reduced, the heat resistance cannot meet the industrial requirement.

In conclusion, the acid anhydride epoxy cured product is synthesized by curing the linear epoxy compound and the acid anhydride compound, and is heated with the alcohol amine compound to degrade in the present disclosure. It is workable to introduce the polyol obtained in the degradation to the synthesis of the unsaturated polyester resin, and the polyol can be a raw material for the subsequent synthesis of the unsaturated polyester resin without rinsing and purification. Moreover, the raw material of the degradable product can be obtained by recycling the acid anhydride epoxy cured product, which has advantages in the industrial cost, and has a great contribution to the resin recycle.

Although the present disclosure has been described in considerable detail with reference to certain embodiments thereof, other embodiments are possible. Therefore, the spirit and scope of the appended claims should not be limited to the description of the embodiments contained herein. **It** will be apparent to those skilled in the art that various modifications and variations can be made to the structure of the present disclosure without departing from the scope or spirit of the disclosure. **In** view of the foregoing, it is intended that the present disclosure cover modifications and variations of this disclosure provided they fall within the scope of the following claims.

## Claims

1. A method for degrading an acid anhydride epoxy cured product, **characterized in** comprising:
performing a mixing step, wherein the acid anhydride epoxy cured product is mixed with an alcohol amine compound so as to form a degradation system, and the alcohol amine compound has a structure represented by formula (I): 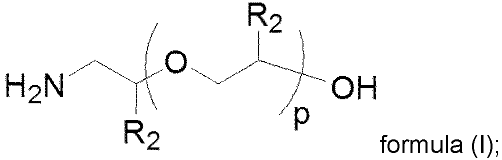
wherein R₂ is each independently a methyl group or a hydrogen atom, p is an integer from 0 to 6; and
performing a degradation step, wherein the degradation system is heated to a degradation temperature so that the acid anhydride epoxy cured product is degraded into a polyol.

2. The method for degrading the acid anhydride epoxy cured product of claim 1, **characterized in** further comprising:
performing a synthesis step of the acid anhydride epoxy cured product, wherein an epoxy compound having a structure represented by formula (II) or/and an epoxy compound having a structure represented by formula (III) reacts with an acid anhydride compound having a structure represented by formula (IV) so as to synthesize the acid anhydride epoxy cured product: 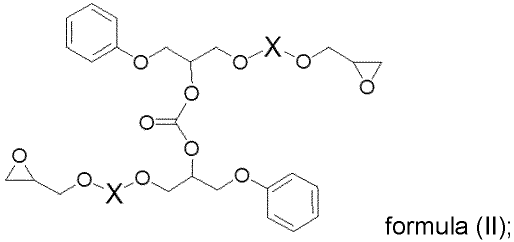 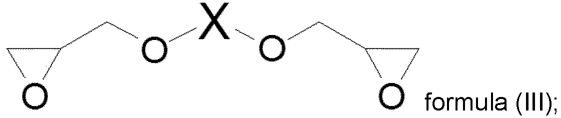 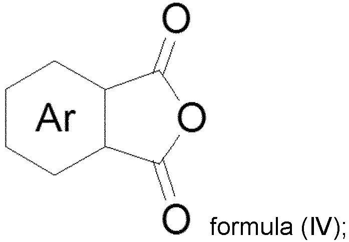 wherein X is each independently an alkylene group of 1 to 12 carbon atoms, or a structure represented by formula (A) or formula (B): 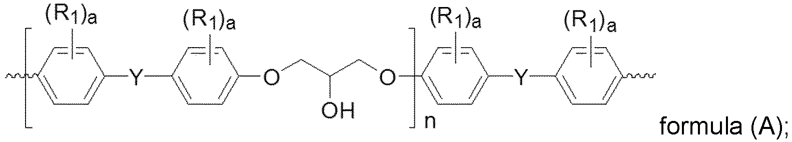 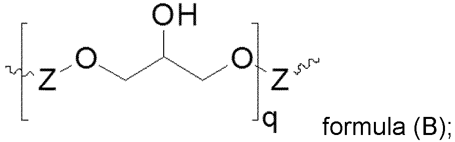
wherein R₁ is each independently an alkyl group of 1 to 4 carbon atoms, a methoxy group, a nitro group or a halogen atom, a is an integer from 0 to 4, n and q are integers from 0 to 10;
wherein Y is each independently a single bond, or a structure represented by formula (i), formula (ii), formula (iii), formula (iv), formula (v), formula (vi), formula (vii), formula (viii), formula (ix) or formula (x): 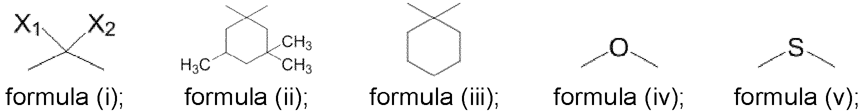 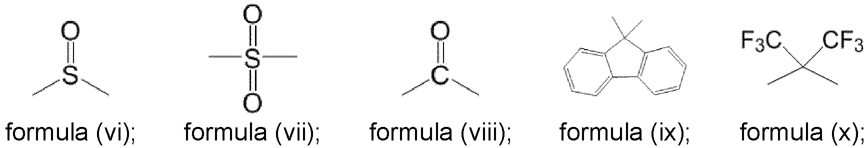
wherein X₁ and X₂ are each independently a hydrogen atom, an alkyl group of 1 to 6 carbon atoms or an aryl group of 6 to 12 carbon atoms;
wherein Z is each independently an alkylene group of 1 to 12 carbon atoms, an ortho-phenylene group, a meta-phenylene group, a para-phenylene group, or a structure represented by formula (xi) or formula (xii): 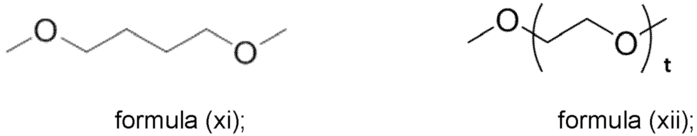
wherein t is an integer from 1 to 6;
wherein Ar is a single bond, a double bond, or a structure represented by formula (a), formula (b), formula (c) or formula (d):

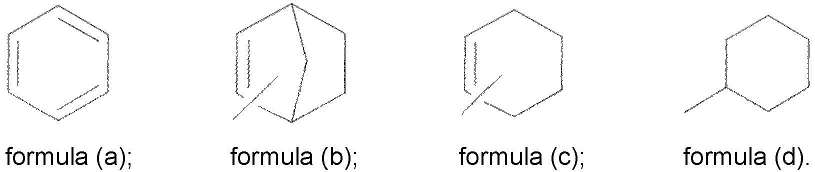

3. The method for degrading the acid anhydride epoxy cured product of claim 1, **characterized in that**, the degradation temperature is 80°C to 180°C.

4. The method for degrading the acid anhydride epoxy cured product of claim 3, **characterized in that**, the degradation temperature is 100°C to 150°C.

5. The method for degrading the acid anhydride epoxy cured product of claim 1, **characterized in that**, the degradation system is heated to the degradation temperature for a degradation time in the degradation step, and the degradation time is 5 minutes to 600 minutes.

6. The method for degrading the acid anhydride epoxy cured product of claim 5, **characterized in that**, the degradation time is 360 minutes to 480 minutes.

7. The method for degrading the acid anhydride epoxy cured product of claim 1, **characterized in that**, the polyol comprises at least one of structures represented by formula (V), formula (VI), formula (VII) and formula (VIII):

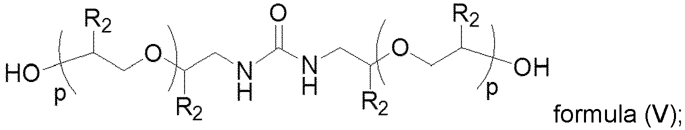

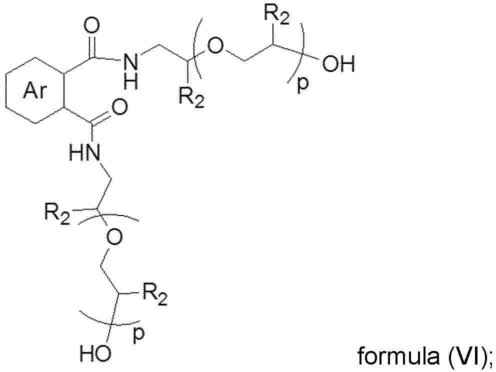

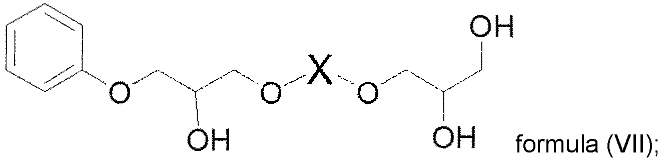

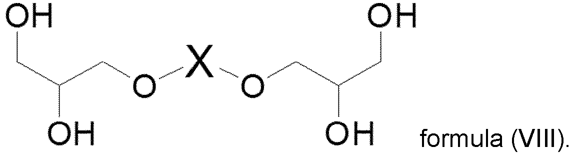

8. The method for degrading the acid anhydride epoxy cured product of claim 1, **characterized in that**, a weight ratio of the alcohol amine compound to the acid anhydride epoxy cured product is 5:1 to 20:1.

9. The method for degrading the acid anhydride epoxy cured product of claim 8, **characterized in that**, the weight ratio of the alcohol amine compound to the acid anhydride epoxy cured product is 10:1.

10. A polyol, **characterized in that**, the polyol is obtained by performing the method for degrading the acid anhydride epoxy cured product of any one of claim 1 to claim 9.

11. A thermosetting resin, **characterized in that**, the thermosetting resin is obtained by adding the polyol of claim 10 to a resin reactant.

12. **The** thermosetting resin of claim 11, **characterized in that**, the thermosetting resin is an unsaturated polyester resin.

13. **The** thermosetting resin of claim 12, **characterized in that**, the resin reactant comprises propylene glycol, diethylene glycol, benzoquinone, phthalic anhydride, maleic anhydride and styrene.

14. **The** thermosetting resin of claim 11, **characterized in that**, an added amount of the polyol is 1 weight percent to 30 weight percent of a total amount of the resin reactant and the polyol.

15. **The** thermosetting resin of claim 14, **characterized in that**, the added amount of the polyol is 5 weight percent to 15 weight percent of the total amount of the resin reactant and the polyol.
